# EUROPÄISCHE PATENTANMELDUNG

(11) **EP 1 593 986 A1**
(43) Veröffentlichungstag der Anmeldung: **09.11.2005**
(21) Anmeldenummer: 05008455.7
(22) Anmeldetag: 19.04.2005
(51) Int. Cl.: G01S 11/06, B60C 23/04, B60R 16/02

(54) **Verfahren und Vorrichtung zum Kontrollieren der Funktionsfähigkeit einer definierten Anzahl Sensoren an einem Kraftfahrzeug**

(30) Priorität: 04.05.2004 DE 102004021831
(71) Anmelder: GM Global Technology Operations, Inc., Detroit, MI 48265-3000 (US)
(72) Erfinder: Fries, Hermann, 55234 Biebelnheim (DE); Lassrich, Ingobert, 65468 Trebur (DE); Lemp, Daniel, 64283 Darmstadt (DE)
(74) Vertreter: Daniel, Ulrich W.P.

(57) **Zusammenfassung**

Bei einem Verfahren zum Kontrollieren der Funktionsfähigkeit einer definierten Anzahl (Z) fahrzeugabhängiger Sensoren (S) an einem Kraftfahrzeug (10) messen die Sensoren (S) physikalische Betriebsparameter des Kraftfahrzeuges (10) und signalisieren diese an eine zentrale Steuereinheit (11), an der durch Vergleichen der Signalstärke (F) empfangener Signale mit einer vorgebbaren oberen und unteren Grenz-Signalstärke (Fo, Fu) festgestellt wird, ob eine Anzahl von Signalstärken (F), die gleich der Anzahl (Z) der Sensoren (S) ist, in ein derart gebildetes Signalstärkenband (Fb) fallen, anderenfalls wird ein Prüfsignal abgegeben, das wenigstens einen der Sensoren (S) als nicht funktionsfähig anzeigt.

## Beschreibung

Die Erfindung bezieht sich auf ein Verfahren zum Kontrollieren der Funktionsfähigkeit einer definierten Anzahl fahrzeugabhängiger Sensoren an einem Kraftfahrzeug und auf eine entsprechende Vorrichtung, insbesondere zur Durchführung des Verfahrens.

Aus dem Stand der Technik sind Reifendruck-Kontrollsysteme an Kraftfahrzeugen bekannt, mit denen der Luftdruck bzw. der Druck des Füllgases in einem Schlauchreifen oder einem schlauchlosen Reifen messbar ist. Bei Unterschreiten eines Mindestdrucks in dem Reifen geben die Systeme ein Warnsignal auf optischem und/oder akustischem Weg ab, was den Nutzer des Kraftfahrzeuges auf diesen die Verkehrssicherheit beeinträchtigenden Umstand hinweist.

Zur Messung des Luftdrucks in dem Reifen kann ein an sich bekannter Luftdrucksensor, auch Radmodul genannt, verwendet werden, der im oder am Reifen angeordnet ist. Das Radmodul leitet ein Messsignal an eine zentrale Steuereinheit des Systems, wobei zum Empfang z.B. eine Zentralantenne dient, die mit der Steuereinheit verbunden ist. In der Steuereinheit wird das Signal erfasst und z.B. mit einem festlegbaren Mindestwert für den Luftdruck verglichen. Derartige Systeme haben eine hohe Messgenauigkeit, sind einfach zu realisieren und können bereits geringfügige Veränderungen des Luftdrucks im Reifen registrieren.

Nach Einbau der Komponenten im Assembly-Werk muss eine Endkontrolle (Bandendkontrolle) durchgeführt werden. Zu überprüfen ist, ob sich z.B. vier funktionsfähige Radmodule am Kraftfahrzeug befinden und alle anderen Symstemkomponenten (Steuereinheit und ggf. Zusatzeinrichtungen) korrekt montiert und funktionsfähig sind. Im Produktionsablauf eines Kraftfahrzeuges findet diese Überprüfung in zweckmäßiger Weise im Rahmen des Rollenprüfstandsprogramms innerhalb von maximal 40 Sekunden statt.

Nachteilig bei Reifendruck-Kontrollsystemen mit zentralem Signalempfang ist allerdings die Tatsache, dass nicht ohne Zusatzmaßnahmen feststellbar ist, ob es sich beim Empfang von Radmodulsignalen um solche handelt, die von Radmodulen am zu prüfenden Kraftfahrzeug selbst ausgehen, oder um solche, die an Kraftfahrzeugen auf benachbarten Rollenprüfständen oder an Kraftfahrzeugen montiert sind, die an den Rollenprüfständen vorbeifahren.

Bisherige aufwendige Verfahren zielen darauf ab, die Kennung der Radmodule am Kraftfahrzeug zu ermitteln (z. B. über Barcode oder elektronische Abfrage in Fertig- oder Endmontage) und anschließend eventuell sogar positionsgerechte Programmierung der zum Kraftfahrzeug gehörigen Sensor-Kennungen in die Steuereinheit. Dazu werden die zum Kraftfahrzeug gehörende Radmodul-Identifikationsnummern in einem Fahrzeugdatensatz gespeichert und während der Bandendeprogrammierung des Gesamtfahrzeuges über Diagnosefunktionen in die Steuereinheit einprogrammiert. Damit sind der Steuereinheit die Radmodule bekannt und während des Rollenprüfstandsprogramms werden die empfangenen Radmodul-Identifikationsnummern mit den in der Steuereinheit einprogrammierten Radmodul-Identifikationsnummern ausreichend empfangen, so dass die Reifendruckkontrolle positiv abgeschlossen wird.

Des Weiteren sind bei den bekannten Verfahren die hohen Kosten für die Werksinstallation nachteilig, die insbesondere bei kleineren Stückzahlen und mehreren involvierten Assembly-Werken in einem nicht mehr vertretbaren Rahmen liegen. Insbesondere bei manuellen Verfahren (z.B. Einlesen eines Barcodes) kann es zu Bedienfehlern kommen. Die Reifendruckkontrolle dieser Kraftfahrzeuge wird - obwohl in Ordnung - im Rollenprüfstand als defekt deklariert. Darüber hinaus sind aufwendige Vorkehrungen für den Fall zu treffen, dass in der Reparatur des Assembly-Werks eines oder mehrere der Räder ausgetauscht werden müssen. Die nicht mehr am Kraftfahrzeug befindlichen Radmodule müssen aus dem Fahrzeugdatensatz gelöscht und neue Radmodule müssen dem Fahrzeugdatensatz hinzugefügt werden. Um diese Abläufe sicher durchführen zu können, sind weitere erhebliche Installationen notwendig.

Die DE 195 44 661 A1 beschreibt ein Verfahren zum Messen und Aufzeichnen eines Betriebsparameters eines Kraftfahrzeuges, mit dem die Differenz der Reifenluftdrücke zwischen linkem und rechtem Rad einer Fahrzeugachse feststellbar ist. Die in einem Rollenbremsprüfstand jeweils auf ein Rollenpaar abgestützten Räder werden von Antriebsrollen angetrieben, die sich mit gleicher, konstanter Geschwindigkeit drehen. Bei unterschiedlichen Luftdrücken ergeben sich unterschiedliche Drehgeschwindigkeiten der Räder, deren Geschwindigkeitsdifferenz als Maß für den Luftdruckunterschied in den Rädern dient. Eine Funktionsprüfung eventuell am Kraftfahrzeug vorhandener Radmodule wird nicht vorgenommen und ist auch nicht notwendig, da das Verfahren deren Nutzung nicht erfordert.

Es ist Aufgabe der Erfindung, ein Verfahren und eine Vorrichtung der eingangs genannten Art bereitzustellen, das bzw. die leicht durchführbar, fehlerunanfällig und kostengünstig ist.

Gelöst wird diese Aufgabe durch ein Verfahren, bei dem die Sensoren physikalische Betriebsparameter des Kraftfahrzeuges messen und an eine zentrale Steuereinheit signalisieren, an der durch Vergleichen der Signalstärke empfangener Signale mit einer vorgebbaren oberen und unteren Grenz-Signalstärke festgestellt wird, ob eine Anzahl von Signalstärken, die gleich der Anzahl der Sensoren ist, in ein derart gebildetes Signalstärkenband fallen, anderenfalls ein Prüfsignal abgegeben wird, das wenigstens einen der Sensoren als nicht funktionsfähig anzeigt.

Es kann sich dabei grundsätzlich um die Messung beliebiger physikalischer Betriebsparameter, wie z.B. Druck und/oder Temperatur, handeln. Ein wesentlicher Gedanke besteht darin, als Kriterium für die am Kraftfahrzeug befindlichen Sensoren bzw. Radmodule deren an der Steuereinheit empfangene Signal- bzw. Empfangsfeldstärke heranzuziehen. Dabei ist zu beachten, dass sich z.B. in einer metallischen Rollenprüfstandskammer die Signalstärke anders verhält als später auf der Straße. Bei vorangegangenen Entwicklungsarbeiten hat sich gezeigt, dass die Signalstärke der Sensoren vom eigenen Kraftfahrzeug höher ist als von z. B. Kraftfahrzeugen in benachbarten Rollenprüfständen oder von an den Prüfständen vorbeifahrender Kraftfahrzeuge. Die untere und obere Grenz-Signalstärke des Signalstärkenbands wird nun so gewählt, dass die Signalstärken der am Kraftfahrzeug zu kontrollierenden Sensoren darin auftreten müssen. Ist die Anzahl dieser Signale ungleich der definierten Anzahl dieser Sensoren, ist wenigstens ein Sensor funktionsuntüchtig. Es wird dann ein entsprechendes Prüfsignal abgegeben.

Das Verfahren ist auf Grund seines einfachen Prüfablaufs leicht durchführbar, somit zeitunkritisch und kostengünstig. Da das Signalstärkenband bei Bandende-programmierung in die Steuereinheit eingespeist und der Prüfablauf vollautomatisch durchlaufen wird, ist auch kein manueller Eingriff des Werkers mehr nötig. Damit ist das Verfahren zudem fehlerunanfällig, was eine weitere Kostenersparnis bewirkt.

Bevorzugt werden die Grenz-Signalstärken und/oder die Breite des Signalstärkenbands in Abhängigkeit fahrzeugespezifischer Merkmale, insbesondere des Fahrzeugtyps und der Sensorpositionen, bestimmt und vorgegeben. Neben den Besonderheiten des Rollenprüfstands können gerade von diesen Merkmalen die Signalstärken der zu kontrollierenden Sensoren beeinflusst werden, weshalb deren Signalstärken an der Steuereinheit schwächer oder stärker ausfallen. Es muss deshalb ein dementsprechend angepasstes Signalstärkenband - definiert durch eine obere und eine untere Grenze - vorgegeben werden, in dem die Signalstärken der zu kontrollierenden Sensoren zu erwarten sind. Dabei kann auch die vom Kunden gewünschte Ausstattung des Kraftfahrzeuges mit elektrischen, mechanischen und elektromechanischen Komfortkomponenten, wie z.B. Navigations- und Unterhaltungsanlage, Klimaanlage, Fenstersteuerung, Sitzverstellung, Servolenkung usw., zu berücksichtigen sein. In Abhängigkeit der genannten Merkmale kann schon im Produktionsplanungs- und Steuerungssystem hinterlegt sein, welches Signalstärkenband bei Bandendeprogrammierung Verwendung finden soll.

Vorzugsweise werden die Grenz-Signalstärken des Signalstärkenbands in Abhängigkeit von der Signalstärke wenigstens eines Sensors bestimmt und adaptiv nachgeführt. Dadurch kann während eines Rollenprüfstandslaufs auch das schon vorgegebene Signalstärkenband nachgeführt werden, um Unterschiede z.B. in Fahrzeugtyp (Karosserieform) und -ausstattung zu berücksichtigen. Dies bedeutet eine erhebliche Vereinfachung des Verfahrens dahingehend, dass die vorstehend angesprochenen Abhängigkeiten zugunsten einer weitgehend pauschalen Vorgabe eines Signalstärkenbands aufgelöst werden, das im Laufe der Prüfung nachgeführt wird. Das Signalstärkenband kann dabei definiert durch seine untere und obere Grenz-Signalstärke oder als Signalstärkenbreite vorgegeben werden.

Eine solche Nachführung kann auf die im Folgenden beschriebene Arten geschehen.

In Ausgestaltung der Erfindung werden an der zentralen Steuereinheit die empfangenen Signalstärken zum Bilden einer Rangfolge höchster bis niedrigster Signalstärke miteinander verglichen und die obere Grenz-Signal-stärke des Signalstärkenbands wird durch die Signalstärke ersten Rangs festgelegt. Die obere Grenz-Signalstärke des Signalstärkenbands wird also auf die höchste Signalstärke kalibriert. Ist dann eine mit den zu kontrollierenden Sensoren gleiche Anzahl von Signalstärken in dem nunmehr kalibrierten Signalstärkenband festzustellen, so ist das Kraftfahrzeug in Bezug auf deren Überprüfung in Ordnung.

Nach einer alternativen Weiterbildung werden an der zentralen Steuereinheit die empfangenen Signalstärken zum Bilden einer Rangfolge höchster bis niedrigster Signalstärke miteinander verglichen und die untere Grenz-Signalstärke des Signalstärkenbands wird durch die Signalstärke festgelegt, deren Rang gleich der Anzahl der Sensoren ist. Im Gegensatz zur vorstehend beschriebenen Ausführungsform wird die untere Grenz-Signalstärke des Signalstärkenbands also auf die Signalstärke kalibriert, die ihrem Rang nach der Anzahl der zu kontrollierenden Sensoren gleich ist. Wird auch hier eine mit den zu kontrollierenden Sensoren gleiche Anzahl von Signalstärken in dem nunmehr kalibrierten Signalstärkenband festgestellt, so ist das Kraftfahrzeug in Bezug auf deren Überprüfung in Ordnung.

Bei einer weiteren alternativen Ausgestaltung werden an der zentralen Steuereinheit die empfangenen Signalstärken zum Bilden einer Rangfolge höchster bis niedrigster Signalstärke miteinander verglichen und aus einer Anzahl ranghöchster Signalstärken, die gleich der Anzahl der Sensoren ist, wird ein Mittelwert gebildet, der als mittlere Signalstärke des Signalstärkenbands festgelegt wird. Hier findet eine Kalibrierung des Signalstärkenbands auf einen Mittelwert statt, um den herum die Signalstärken zum Kraftfahrzeug gehörender Sensorsignale zu erwarten sind. Wird wiederum eine mit den zu kontrollierenden Sensoren gleiche Anzahl von Signalstärken in dem kalibrierten Signalstärkenband festgestellt, so ist das Kraftfahrzeug in Bezug auf deren Überprüfung in Ordnung.

Es ist anzumerken, dass die drei vorstehend beschriebenen Ausführungsformen des Verfahrens auch kombiniert angewandt werden können, z.B. durch seriellen Ablauf. Stimmt die Anzahl festgestellter Signalstärken in dem Signalstärkenband nicht mit der definierten Anzahl zu kontrollierender Sensoren überein, passiert das Kraftfahrzeug den Rollenprüfstand als defekt und muss in dem Reperaturbereich des Assembly-Werks in Stand gesetzt werden. Nach Abschluss der Reparatur wird erneut ein Rollenprüfstandstest zur Überprüfung der Sensoren durchgeführt.

Zweckmäßigerweise wird beim Vorliegen einer Anzahl von Signalstärken in dem Signalstärkenband, die gleich der Anzahl der Sensoren ist, ein Prüfsignal abgegeben, das die Sensoren als funktionsfähig anzeigt. Das Prüfsignal unterscheidet sich von dem, das defekte Sensoren anzeigt. Es bietet neben der Aussage, dass alle zu Kontrollierenden Sensoren funktionsfähig sind auch Aufschluss darüber, ob das Prüfverfahren an sich durchgeführt wurde und fehlerfrei arbeitet. Bevorzugt zeigt das Prüfsignal die Anzahl nicht funktionsfähiger Sensoren an. Dies erleichtert dem Werker das Abschätzen des Reparaturumfangs am Kraftfahrzeug und die Anforderung der Austauschteile im Assembly-Werk.

Vorteilhafterweise zeigt das Prüfsignal die Sensorposition nicht funktionsfähiger Sensoren an. Diese kann aus der Nähe der Steuereinheit zu z.B. fahrzeug-links-und/oder -rechtsseitigen Front- und/oder Hecksensoren ermittelt werden, die sich an der Stärke der empfangenen Signale ablesen lässt. So ist eine Aussage dahingehend möglich, an welcher Sensorposition ein Funktionsstörung vorliegt.

Vorzugsweise wird die Funktionskontrolle der Sensoren im Stadium der Bandendprüfung und/oder Programmierung eines Kraftfahrzeuges durchgeführt. Damit sind keine weiteren Installationen in dem Assembly-Werk notwendig, um eine Funktionskontrolle der Sensoren am Kraftfahrzeug durchzuführen. Die Überprüfung kann autark während der dynamischen Rollenprüfung erfolgen.

Die Aufgabe wird auch durch eine Vorrichtung gelöst, die Mittel aufweist, um vorgebbare Grenz-Signal-stärken und/oder die Breite eines Signalstärkenbands aufzunehmen, Signalstärken empfangener Signale zu bestimmen und festzustellen, ob die Anzahl der in das Signalstärkenband fallenden Signalstärken einer definierten Anzahl fahrzeugabhängiger Sensoren entspricht.

Ein wesentlicher Vorteil besteht dabei darin, dass ein an sich bekanntes System zum Durchführen des vorstehend beschriebenen Verfahrens genutzt wird und somit keine weiteren Komponenten erforderlich sind. Dabei werden die Grenz-Signalstärken und/oder die Breite des Signalstärkebands bei Bandendeprogrammierung mit Hilfe von Diagnosefunktionen in die Steuereinheit eingespeist, wie dies ebenfalls bekannt ist. Auf diesem Weg wird auch die definierte Anzahl der am Kraftfahrzeug zu kontrollierenden Sensoren in dem Fahrzeugdatensatz hinterlegt. Die Vorrichtung ist einfach aufgebaut und kann unter geringfügigen Modifikationen genutzt werden, was einen Kostenvorteil darstellt.

Vorteilhafterweise weist die Steuereinheit Mittel auf, um eine Rangfolge höchster bis niedrigster Signalstärke zu bilden, aus der die Grenz-Signalstärken des Signalstärkenbands bestimmt und adaptiv nachgeführt werden. Dadurch wird eine hohe Erkennungssicherheit der zu kontrollierenden Sensoren bei Kraftfahrzeugen unterschiedlichen Typs und verschiedener Ausstattungen gewährleistet. Wechselnden Umgebungsbedingungen, die z.B. aus unterschiedlichen Prüfständen herrühren, werden kompensiert. Hierbei umfassen die genannten Mittel einen rechnerintegrierten Steuerschaltkreis oder eine entsprechend ausgeführte Software. Eine rechnerintegrierter Steuerschaltkreis kann als zusätzliche Steckkarte im Steuergerät ausgeführt sein, eine entsprechend modifizierte Software muss lediglich aufgespielt werden.

Bei einer Ausführungsform steht die Steuereinheit über eine jeweilige Funkstrecke mit Sensoren zum Messen physikalischer Betriebsparameter eines Kraftfahrzeuges in Verbindung. Damit ist insbesondere die messtechnische Anbindung von Sensoren an beweglichen Fahrzeugkomponenten, wie Rädern z.B. zur Abstands- (Einparken und Verschleiß) Bewegungs- (ABS), Druck- (Reifen) oder Temperaturkontrolle (Bremsen), an die Steuereinheit sichergestellt. Dies kann auch im Rahmen einer Kombination mit optischer und elektrischer Teilstreckenübertragung von Signalen geschehen. Dabei ist eine mit der Steuereinheit verbundene zentrale Antenne zum Empfangen von Signalen der Sensoren vorgesehen. Diese kann auch in die Steuereinheit integriert sein, womit eine zentrale Komponente zur Signalverarbeitung vorliegt.

Zweckmäßigerweise sind die Sensoren an Reifen des Kraftfahrzeuges angeordnete Luftdrucksensoren. Die Funktionsfähigkeit dieser Sensoren ist aus Sicherheitsgründen von erheblicher Bedeutung, wodurch ihre Überprüfung nicht nur auf die Fahrzeugendkontrolle beschränkt sein kann. Bei Wartungsterminen kann mit der hier beschriebenen Vorrichtung eine regelmäßige Kontrolle der Funktionsfähigkeit vorgenommen werden.

Nach einer Weiterbildung ist die Steuereinheit mit einer Anzeigeeinheit zum Darstellen eines akustischen und/oder optischen Prüfsignals verbunden. Ein akustisches Prüfsignal kann ein kurzer oder längerer Hupton geeigneter Frequenz sein, wohingegen eine optische Darstellung des Prüfergebnisses an oder im Bereich der Armaturentafel des Kraftfahrzeuges erfolgen kann. Der Werker oder der spätere Bediener des Kraftfahrzeuges kann somit leicht vom Funktionszustand der Sensoren Kenntnis nehmen.

Bevorzugt ist die Anzeigeeinheit eine üblicherweise im Kraftfahrzeug schon vorhandene Einrichtung, insbesondere das Display eines Bordcomputers, eines Navigationsgerätes oder einer Armaturentafelanzeige. Dadurch entstehen zur Darstellung des Prüfergebnisses keine weiteren Aufwendungen in Form zusätzlicher Fahrzeugkomponenten.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Die Erfindung wird im Folgenden anhand von Ausführungsbeispielen unter Bezugnahme auf die zugehörigen Zeichnungen näher erläutert. Gleiche oder gleichwirkende Teile sind mit gleichen Bezugsziffern versehen. Es zeigt:
- Fig. 1: eine Draufsicht auf ein schematisch dargestelltes Kraftfahrzeug zur Durchführung des erfindungsgemäßen Verfahrens,
- Fig. 2a: ein Diagramm mit von einer Steuereinheit empfangenen Signalstärken von Sensoren des Kraftfahrzeuges nach Fig. 1,
- Fig. 2b: das Diagramm nach Fig. 2a, wobei einer der Sensoren nicht funktionsfähig ist,
- Fig. 3a: ein weiteres Diagramm mit von einer Steuereinheit empfangenen Signalstärken von Sensoren des Kraftfahrzeuges nach Fig. 1,
- Fig. 3b: das Diagramm nach Fig. 3a, wobei einer der Sensoren nicht funktionsfähig ist,
- Fig. 4a: ein drittes Diagramm mit von einer Steuereinheit empfangenen Signalstärken von Sensoren des Kraftfahrzeuges nach Fig. 1 und
- Fig. 4b: das Diagramm nach Fig. 4a, wobei einer der Sensoren nicht funktionsfähig ist.

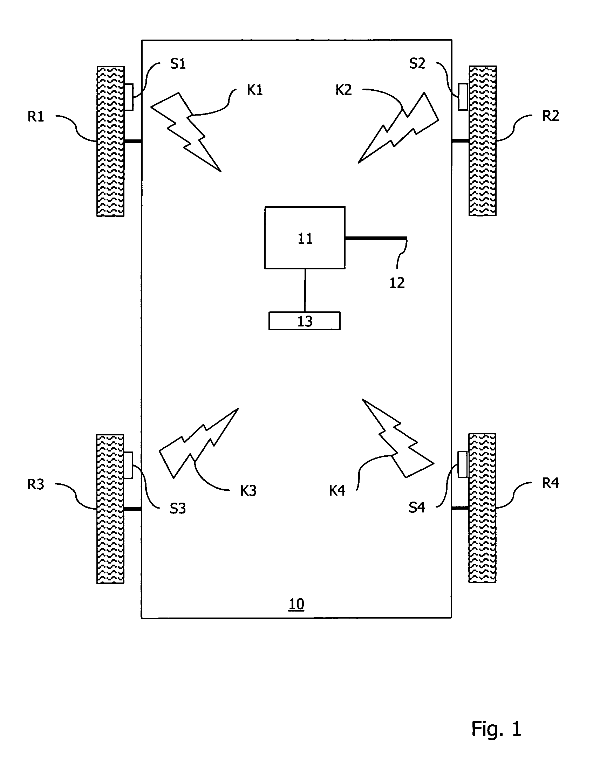

Das Kraftfahrzeug 10 nach Fig. 1 umfasst eine Steuereinheit 11, die mit Sensoren S1 ... S4 an Reifen R1 ... R4 über Funkstrecken K1 ... K4 in Verbindung steht oder in Verbindung treten kann. Die Sensoren S1 ... S4 messen den Luftdruck in den Reifen R1 ... R4. Mit der Steuereinheit 11 ist einerseits eine zentrale Antenne 12 zum Empfangen der Sensorsignale und andererseits eine Anzeigeeinheit 13 in Form eines im Kraftfahrzeug schon vorhandenen Displays verbunden, an der ein Ergebnis einer Funktionsprüfung dargestellt wird.

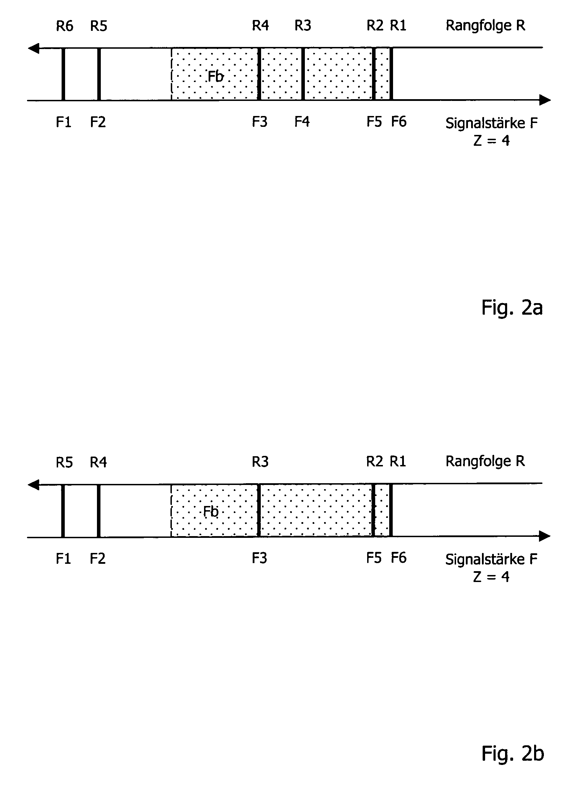

Das Diagramm nach Fig. 2a mit an der Steuereinheit 11 empfangene Signalstärken F von Sensoren S, deren Stärke nach rechts hin zunehmend und deren Rangfolge R in umgekehrter Richtung abnehmend aufgetragen ist, sowie einen Signalstärkenbereich Fb, in dem Signalstärken F einer definierten Anzahl Z zu kontrollierender Sensoren S1 ... S4 auftreten und dessen obere Grenze durch die ranghöchste Signalstärke F6 festgelegt ist. Es sollen die vier Sensoren S1 ... S4 an den Rädern R1 ... R4 des Kraftfahrzeuges 10 der Fig. 1 auf ihre Funktionsfähigkeit überprüft werden. Die obere Grenz-Signalstärke Fo und die untere Grenz-Signalstärke Fu des Signalstärkenbands Fb oder dessen Breite und die definierte Anzahl der am Kraftfahrzeug 10 zu kontrollierenden Sensoren S1 ... S4 werden bei einer Bandendeprogrammierung an die Steuereinheit übertragen, z.B. über eine Funkstrecke oder eine elektrische Steckverbindung. An der Steuereinheit 11 werden dann alle von Sensoren S empfangenen Signale miteinander verglichen und abhängig von ihrer jeweiligen Signalstärke F in die dargestellte Rangfolge R gebracht. Die Signalstärke F1 stellt dabei die schwächste Signalstärke F, die Signalstärke F6 die stärkste Signalstärke F, R1 den höchsten Rang R und R6 den niedrigsten Rang dar. Die obere Grenze des vorgegebenen Signalstärkenbereichs Fb wird in in dieser Ausführungsform abhängig von den empfangenen Signalstärken F adaptiv auf die ranghöchste empfangene Signalstärke F6 festgelegt. In dem Signalstärkenband Fb werden Signalstärken F3 ... F6 erkannt, deren Anzahl gleich der vorgegebenen Anzahl Z = 4 der zu kontrollierenden Sensoren S1 ... S4 ist. Es sind also alle Sensoren S1 ... S4 funktionsfähig, womit an der Anzeigeeinheit 13 ein positives Prüfergebnis angezeigt werden kann.

Die Signalstärken F1 und F2 stammen dabei von Sensoren S, die sich nicht an dem Kraftfahrzeug befinden und möglicherweise von einem in der Nähe befindlichen Kraftfahrzeug stammen.

Die Fig. 2b zeigt das Diagramm nach Fig. 2a, bei dem jedoch einer der zu kontrollierenden Sensoren S1 ... S4 nicht funktionsfähig ist. Es fehlt dabei die in Fig. 2a zu erkennende Signalstärke F4. Die im Signalstärkenband (Fb) auftretende Anzahl der Signalstärken F ist demnach ungleich der Anzahl Z = 4 der zu kontrollierenden Sensoren S1 ... S4, womit eine Fehlfunktion eines Sensors S vorliegt. Dies führt zur Ausgabe einer entsprechenden Warnung an der Anzeigeeinheit 13.

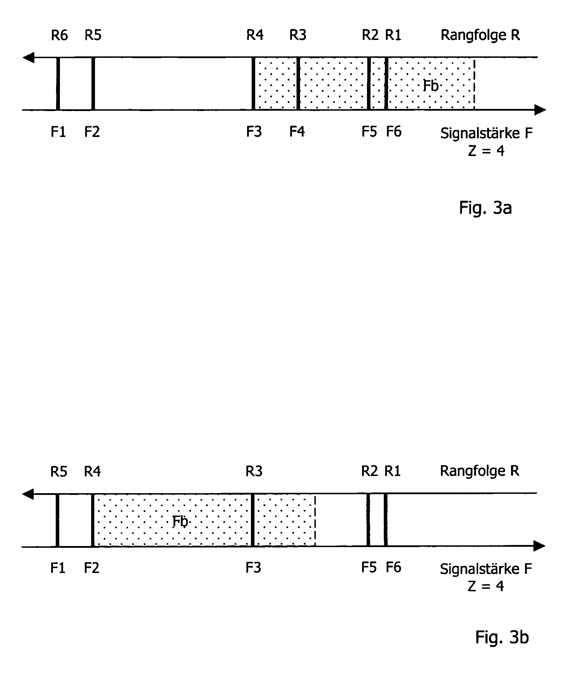

Das Diagramm nach Fig. 3a zeigt an der Steuereinheit 11 empfangene Signalstärken F von Sensoren S, bei dem die untere Grenze des Signalstärkenbereichs (Fb) durch die Signalstärke F festgelegt ist, deren Rang R gleich der definierten Anzahl Z der zu kontrollierenden Sensoren S1 ... S4 ist. Das Prüfverfahren an der Steuereinheit 11 läuft dabei zunächst wie in Fig. 2a beschrieben ab, jedoch wird hier die untere Grenze des vorgegebenen Signalstärkenbereichs (Fb) abhängig von den empfangenen Signalstärken F adaptiv auf die Signalstärke F3 mit Rang R4 festgelegt, der gleich der vorgegebenen Anzahl Z = 4 zu kontrollierender Sensoren S1 ... S4 ist. In den Signalstärkenbereich (Fb) fallen eine gleiche Anzahl von Signalstärken F3 ... F6, womit die Sensoren S1 ... S4 als funktionsfähig überprüft sind.

Die Fig. 3b zeigt das Diagramm nach Fig. 3a, bei dem jedoch einer der zu kontrollierenden Sensoren S1 ... S4 nicht funktionsfähig ist. Es fehlt hier die noch in Fig. 3a dargestellte Signalstärke F4, womit nur drei statt der vorgegeben Anzahl Z = 4 zu kontrollierenden Sensoren S als funktionsfähig gelten können. Von der Steuereinheit 11 wird in der Folge eine Warnung an der Anzeigeeinheit 13 angezeigt.

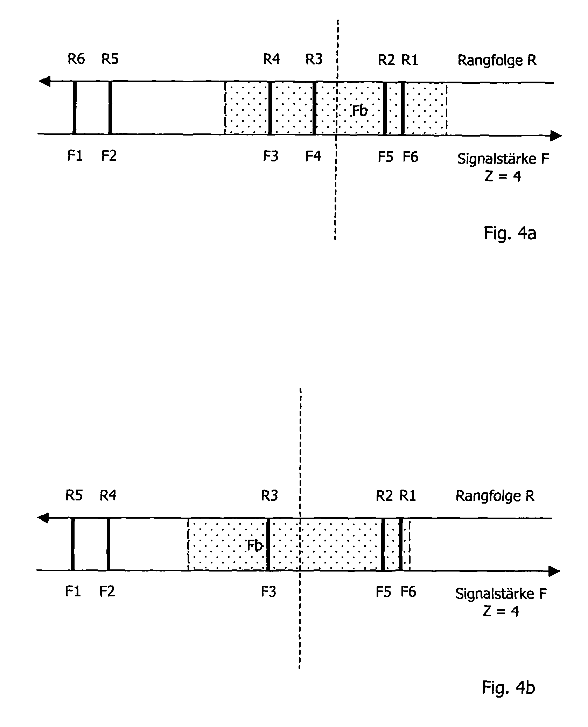

Das Diagramm nach Fig. 4a zeigt an der Steuereinheit 11 empfangenen Signalstärken F von Sensoren S, bei dem die mittlere Signalstärke Fm des Signalstärkenbereichs Fb durch den Mittelwert ranghöchster Signalstärken festgelegt ist, deren Anzahl gleich der definierten Anzahl Z der zu kontrollierenden Sensoren S1 ... S4 ist. Das Prüfverfahren an der Steuereinheit 11 läuft dabei zunächst wie in Fig. 2a bzw. Fig. 3a beschrieben ab, jedoch wird hier der Mittelwert Fm des Signalstärkenbereichs Fb abhängig von den empfangenen Signalstärken F adaptiv auf einen Mittelwert der Signalstärken F höchsten Rangs R festgelegt, der gleich der vorgegebenen Anzahl Z = 4 zu kontrollierender Sensoren S1 ... S4 ist. In den Signalstärkenbereich Fb fallen eine gleiche Anzahl von Signalstärken F3 ... F6, womit die Sensoren S1 ... S4 als funktionsfähig überprüft sind.

Die Fig. 4b zeigt das Diagramm nach Fig. 4a, bei dem jedoch einer der zu kontrollierenden Sensoren S1 ... S4 nicht funktionsfähig ist. Es fehlt hier die noch in Fig. 4a dargestellte Signalstärke F4, womit nur drei statt der vorgegeben Anzahl Z = 4 zu kontrollierenden Sensoren S als funktionsfähig gelten können. Zwar verschiebt sich durch Wegfall der Signalstärke F4 und Einbeziehung der externen Signalstärke F2 in die arithmetische Mittlung die mittlere Signalstärke Fm des Signalstärkenbereichs Fb. Die relevanten Signalstärken F3, F5 und F6 fallen aber immer noch in den - adaptiv nachgeführten - Signalstärkenbereich Fb. Von der Steuereinheit 11 wird auch hier in der Folge eine Warnung an der Anzeigeeinheit 13 angezeigt, dass wenigstens einer der Sensoren S1 ... S4 nicht funktionsfähig ist.

### Bezugszeichenliste

- 10: Kraftfahrzeug
- 11: Steuereinheit
- 12: zentrale Antenne
- 13: Anzeigeeinheit
- F1, F2, F3, F4, F5, F6: Signalstärken
- Fo: obere Grenz-Signalstärke
- Fu: untere Grenz-Signalstärke
- FB: Signalstärkenband
- K: Funkstrecke
- R: Reifen
- R1, R2, R3, R4, R5, R6: Rangfolge
- S1, S2, S3, S4: Sensoren
- Z: Anzahl

## Patentansprüche

1. Verfahren zum Kontrollieren der Funktionsfähigkeit einer definierten Anzahl (Z) fahrzeugabhängiger Sensoren (S) an einem Kraftfahrzeug (10), bei dem die Sensoren (S) physikalische Betriebsparameter des Kraftfahrzeuges (10) messen und an eine zentrale Steuereinheit (11) signalisieren, an der durch Vergleichen der Signalstärke (F) empfangener Signale mit einer vorgebbaren oberen und unteren Grenz-Signal-stärke (Fo, Fu) festgestellt wird, ob eine Anzahl von Signalstärken (F), die gleich der Anzahl (Z) der Sensoren (S) ist, in ein derart gebildetes Signalstärkenband ((Fb)) fallen, anderenfalls ein Prüfsignal abgegeben wird, das wenigstens einen der Sensoren (S) als nicht funktionsfähig anzeigt.

2. Verfahren nach Anspruch 1, **dadurch gekennzeichnet, dass** die Grenz-Signalstärken (Fo, Fu) und/oder die Breite des Signalstärkenbands (Fb) in Abhängigkeit fahrzeugespezifischer Merkmale, insbesondere des Fahrzeugtyps und der Sensorpositionen, bestimmt und vorgegeben werden.

3. Verfahren nach Anspruch 1 oder 2, **dadurch gekennzeichnet, dass** die Grenz-Signalstärken (Fo, Fu) des Signalstärkenbands (Fb) in Abhängigkeit von der Signalstärke (F) wenigstens eines Sensors (S) bestimmt und adaptiv nachgeführt werden.

4. Verfahren nach Anspruch 3, **dadurch gekennzeichnet, dass** an der zentralen Steuereinheit (11) die empfangenen Signalstärken (F) zum Bilden einer Rangfolge (R1 ... R6) höchster bis niedrigster Signalstärke (F) miteinander verglichen werden, und die obere Grenz-Signalstärke (Fo) des Signalstärkenbands (Fb) durch die Signalstärke (F) ersten Rangs festgelegt wird.

5. Verfahren nach Anspruch 3, **dadurch gekennzeichnet, dass** an der zentralen Steuereinheit (11) die empfangenen Signalstärken (F) zum Bilden einer Rangfolge (R1 ... R6) höchster bis niedrigster Signalstärke (F) miteinander verglichen werden, und die untere Grenz-Signalstärke (Fu) des Signalstärkenbands (Fb) durch die Signalstärke (F) festgelegt wird, deren Rang gleich der Anzahl (Z) der Sensoren (S) ist.

6. Verfahren nach Anspruch 3, **dadurch gekennzeichnet, dass** an der zentralen Steuereinheit (Fb) die empfangenen Signalstärken (F) zum Bilden einer Rangfolge (R1 ... R6) höchster bis niedrigster Signalstärke (F) miteinander verglichen werden, und aus einer Anzahl ranghöchster Signalstärken (F), die gleich der Anzahl (Z) der Sensoren (S) ist, ein Mittelwert gebildet wird, der als mittlere Signalstärke (Fm) des Signalstärkenbands (Fb) festgelegt wird.

7. Verfahren nach einem der Ansprüche 1 bis 6, **dadurch gekennzeichnet, dass** das beim Vorliegen einer Anzahl von Signalstärken (F) in dem Signalstärkenband (FB), die gleich der Anzahl (Z) der Sensoren (S) ist, ein Prüfsignal abgegeben wird, das die Sensoren (S) als funktionsfähig anzeigt.

8. Verfahren nach Anspruch 7, **dadurch gekennzeichnet, dass** das Prüfsignal die Anzahl nicht funktionsfähiger Sensoren (S) anzeigt.

9. Verfahren nach Anspruch 7 oder 8, **dadurch gekennzeichnet, dass** das Prüfsignal die Sensorposition nicht funktionsfähiger Sensoren (S) anzeigt.

10. Verfahren nach einem der Ansprüche 1 bis 9, **dadurch gekennzeichnet, dass** die Funktionskontrolle der Sensoren (S) im Stadium der Bandendprüfung und/oder Programmierung eines Kraftfahrzeuges (10) durchgeführt wird.

11. Vorrichtung zum Kontrollieren der Funktionsfähigkeit einer definierten Anzahl (Z) fahrzeugabhängiger Sensoren (S) an einem Kraftfahrzeug (10), die mit einer Steuereinheit (11) kommunizieren, insbesondere zur Durchführung des Verfahrens nach einem der Ansprüche 1 bis 10, **dadurch gekennzeichnet, dass** diese Mittel aufweist, um vorgebbare Grenz-Signalstärken (Fo, Fu) und/oder die Breite eines Signalstärkenbands (Fb) aufzunehmen, Signalstärken (F) empfangener Signale zu bestimmen und festzustellen, ob die Anzahl der in das Signalstärkenband (Fb) fallenden Signalstärken (F) einer definierten Anzahl (Z) fahrzeugabhängiger Sensoren (S) entspricht.

12. Vorrichtung nach Anspruch 11, **dadurch gekennzeichnet, dass** die Steuereinheit (11) Mittel aufweist, um eine Rangfolge (R1 ... R6) höchster bis niedrigster Signalstärke (F) zu bilden, aus der die Grenz-Signal-stärken (Fo, Fu) des Signalstärkenbands (Fb) bestimmt und adaptiv nachgeführt werden.

13. Vorrichtung nach Anspruch 11 oder 12, **dadurch gekennzeichnet, dass** die Mittel einen rechnerintegrierten Steuerschaltkreis oder eine entsprechend ausgeführte Software umfassen.

14. Vorrichtung nach einem der Ansprüche 11 bis 13, **dadurch gekennzeichnet, dass** die Steuereinheit (11) über eine jeweilige Funkstrecke (K) mit Sensoren (S) zum Messen physikalischer Betriebsparameter eines Kraftfahrzeuges in Verbindung steht oder treten kann.

15. Vorrichtung nach Anspruch 14, **dadurch gekennzeichnet, dass** an der Steuereinheit (11) eine mit dieser verbundene zentrale Antenne 12 zum Empfangen von Signalen der Sensoren (S) vorgesehen ist.

16. Vorrichtung nach Anspruch 14 oder 15, **dadurch gekennzeichnet, dass** die Sensoren (S) an Reifen des Kraftfahrzeuges angeordnete Luftdrucksensoren sind.

17. Vorrichtung nach einem der Ansprüche 11 bis 16, **dadurch gekennzeichnet, dass** die Steuereinheit (11) mit einer Anzeigeeinheit (13) zum Darstellen eines akustischen und/oder optischen Prüfsignals verbunden ist.

18. Steuereinheit nach Anspruch 17, **dadurch gekennzeichnet, dass** die Anzeigeeinheit (13) eine üblicherweise im Kraftfahrzeug (10) schon vorhandene Einrichtung, insbesondere das Display eines Bordcomputers, eines Navigationsgerätes oder einer Armaturentafelanzeige, ist.
